# EUROPEAN PATENT APPLICATION

(11) **EP 4 303 291 A1**
(43) Date of publication of application: **10.01.2024**
(21) Application number: 23183026.6
(22) Date of filing: 03.07.2023
(51) Int. Cl.: C12G 1/02, C12H 1/22

(54) **TANK FOR WINEMAKING PLANTS**

(30) Priority: 05.07.2022 IT 202200014170
(71) Applicant: Defranceschi S.r.l., 40026 Imola (BO) (IT)
(72) Inventor: GUILLEMAIN LAURENT, Jean Paul, 48123 RAVENNA (IT)
(74) Representative: Modiano, Micaela Nadia

(57) **Abstract**

A tank (1) for winemaking plants, which comprises a supporting frame for at least one containment body (2) which has a bottom wall (3), a lateral containment surface (4) and a top wall (5), an access hatch (6) being defined at the top closure wall (5); the tank comprises, at the top closure wall (5), at least one recessed portion (7) which extends around the access hatch (6), there being at least one device (10) for extracting carbon dioxide which comprises extraction means (11) connected to at least one extraction duct (12) provided with at least one first extraction intake (13) which ends substantially proximate to the at least one recessed portion (7).

## Description

The present invention relates to a tank for winemaking plants.

The buildup of carbon dioxide which develops naturally from the fermentation of the must is a problem that is extremely felt.

In fact, under conditions of poor ventilation and owing to the typical geometric shapes of the spaces, carbon dioxide can build up and stratify in the atmosphere inside the work environment, typically a wine cellar, with consequent decrease in the concentration of oxygen. In this regard, it is to be noted that carbon dioxide has a greater density than air and therefore it tends to build up in a downward region.

It should be noted that this risk is even greater in situations in which the fermentation tanks are placed inside rooms in the wine cellar that are poorly ventilated.

Furthermore, exposure to carbon dioxide can also occur during punching-down operations carried out with manually-actuated equipment.

The risk associated with exposure to a high concentration of carbon dioxide can even result in death by asphyxiation, not least by virtue of the reduction of oxygen in the air.

Finally it should be noted that prolonged exposure to CO₂ at high concentrations also has effects on the respiratory function and on the central nervous system: inhalation of carbon dioxide can in fact cause acidosis, with consequent depression of the central nervous system.

In order to seek to reduce the risks during fermentation, nowadays the only effective system for preventing the buildup of CO₂ is, and remains, changing the air regularly.

For this reason, solutions have been proposed which involve the installation, inside wine cellars, of forced air extraction and air change systems, which are substantially constituted by pipes provided with extraction inlets ending in the environment in which the carbon dioxide builds up, and which are connected to extraction means that are configured to ensure the change of air.

Such systems however need to be dimensioned such as to ensure a high rate of turnover of all the air contained in the environment, also taking account of the stratification of the carbon dioxide which, as explained previously, being heavier than air, tends to sink toward the floor.

For this reason, in some types of provided systems, the extraction inlets are arranged close to the floor, but in these cases the space occupation often makes it difficult to carry out the required activities.

The aim of the present invention is to provide a tank for winemaking plants which is capable of improving the known art in one or more of the above-mentioned aspects.

Within this aim, an object of the invention is to make a tank for winemaking plants available that makes it possible to drastically reduce the risks owing to the presence of carbon dioxide, while appreciably reducing the consumption of the devices used and their visual impact.

Another object of the invention is to provide a tank for winemaking plants that is highly reliable, easy to implement and of low cost.

This aim and these and other objects which will become better apparent hereinafter are achieved by a tank for winemaking plants according to claim 1, optionally provided with one or more of the characteristics of the dependent claims.

Further characteristics and advantages of the invention will become better apparent from the description of some preferred, but not exclusive, embodiments of the winemaking plant according to the invention, illustrated by way of non-limiting example in the accompanying drawings wherein:
Figure 1 is a partially transparent perspective view of the upper portion of a tank according to the invention;
Figure 2 shows a first embodiment of a footing of the tank according to the invention;
Figure 3 shows a second embodiment of a footing of the tank according to the invention;
Figure 4 is a cross-sectional view of a tank according to the invention, taken along a vertical plane;
Figure 5 is a perspective view of another embodiment of the tank according to the invention.

With reference to the figures, the tank for winemaking plants according to the invention, generally designated by the reference numeral 1, comprises a supporting frame for at least one containment body 2.

The containment body 2 has a bottom wall 3, a lateral containment surface 4 and a top wall 5.

In particular, an access hatch 6 is defined at the top closure wall 5.

According to the present invention, at the top closure wall 5, there is at least one recessed portion 7 which extends about the access hatch 6.

The access hatch 6 comprises an upper opening.

In particular, the recessed portion 7 is arranged at a lower elevation with respect to the upper opening of the access hatch 6.

The recessed portion 7 is defined externally to and around the side surface of the access hatch 6.

The recessed portion 7 has a channel-like structure that extends about the access hatch.

The channel-like structure is substantially U-shaped in transverse cross-section.

The recessed portion 7 is defined at the top closure wall, which is substantially flat or rounded.

The tank 1 further comprises at least one device 10 for extracting carbon dioxide, which comprises extraction means 11 connected to at least one extraction duct 12.

The extraction duct 12 has at least one first extraction intake 13 which ends substantially proximate to the at least one recessed portion 7.

By creating a partial vacuum in the recessed portion 7 arranged just below the access hatch 6 from which the carbon dioxide exits, this embodiment makes it possible to capture and extract the carbon dioxide right when it exits from the tank, so that it cannot then expand into the environment.

Advantageously, the tank 1 comprises at least one supporting footing 30.

The at least one extraction duct 12 is provided, advantageously, with at least one second extraction intake 14 arranged at the supporting footing 30.

In fact, as explained previously, since carbon dioxide is heavier than air, the second extraction intakes 14 make it possible to trap any pockets of carbon dioxide that are not extracted by the first extraction intakes 13.

Preferably, as shown in the figures, the extraction duct 12 with at least one first extraction intake 13 which ends substantially proximate to the recessed portion 7 is at least partially incorporated within the top closure wall 4.

In this manner, the visual impact of the device 10 for extracting carbon dioxide is further reduced.

Conveniently, there are at least two first extraction intakes 13, which are arranged mutually angularly spaced apart, in particular at regular intervals, about the axis of extension of the access hatch 6.

Advantageously, the recessed portion 7 extends for at least 270° about the axis of extension of the access hatch 6 and, more preferably, for the entire peripheral extension of the access hatch.

Conveniently, the recessed portion 7 extends externally to the lateral edge of the access hatch 6.

As shown in the figures, the recessed portion 7 has an open upwards transverse cross-section that is substantially U-shaped.

The tank 1 can have, proximate to its footing 20, a sunk region of the floor on which it rests.

In this case, at least one second extraction intake 14 is arranged substantially at the sunk region.

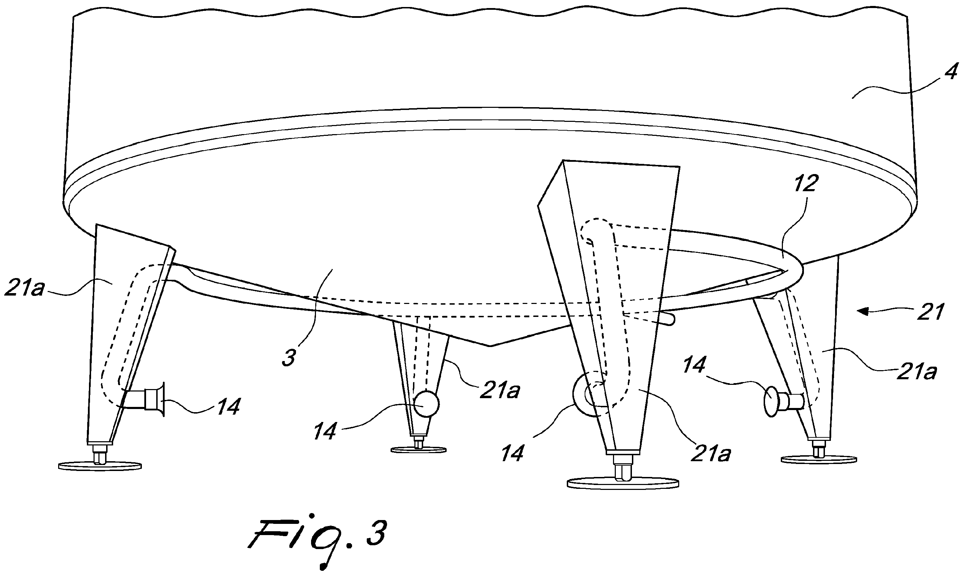

With reference to the embodiment shown in Figure 3, the footing 20 comprises at least one central resting body; in this case, the one or more second extraction intakes 14 are arranged substantially at the central resting body.

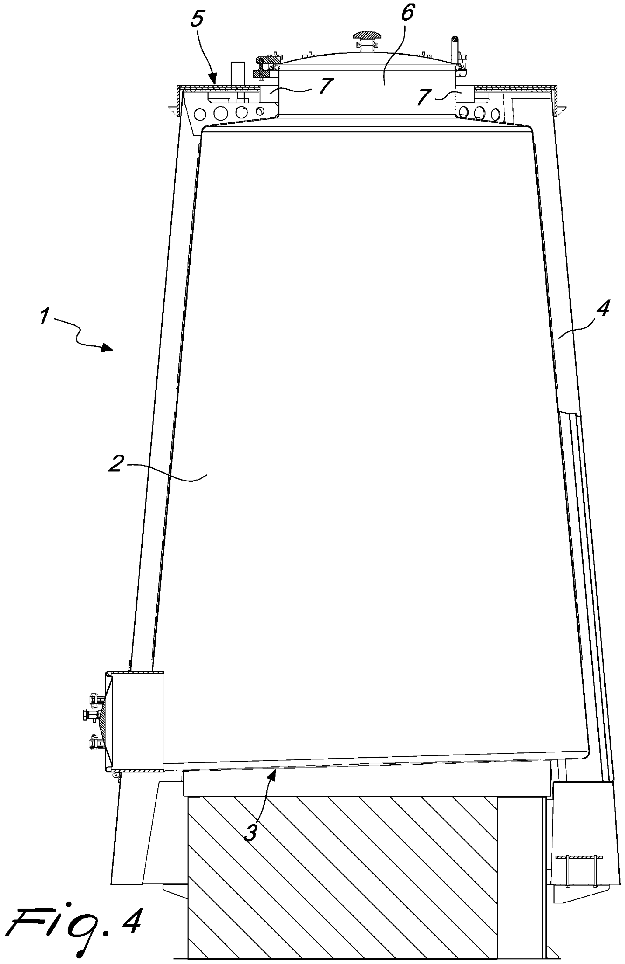

Alternatively, as shown in Figure 4, the footing 20 comprises at least three supporting feet 21a; in this case, the one or more second extraction intakes 14 are arranged substantially at the supporting feet 21a of the tank 1.

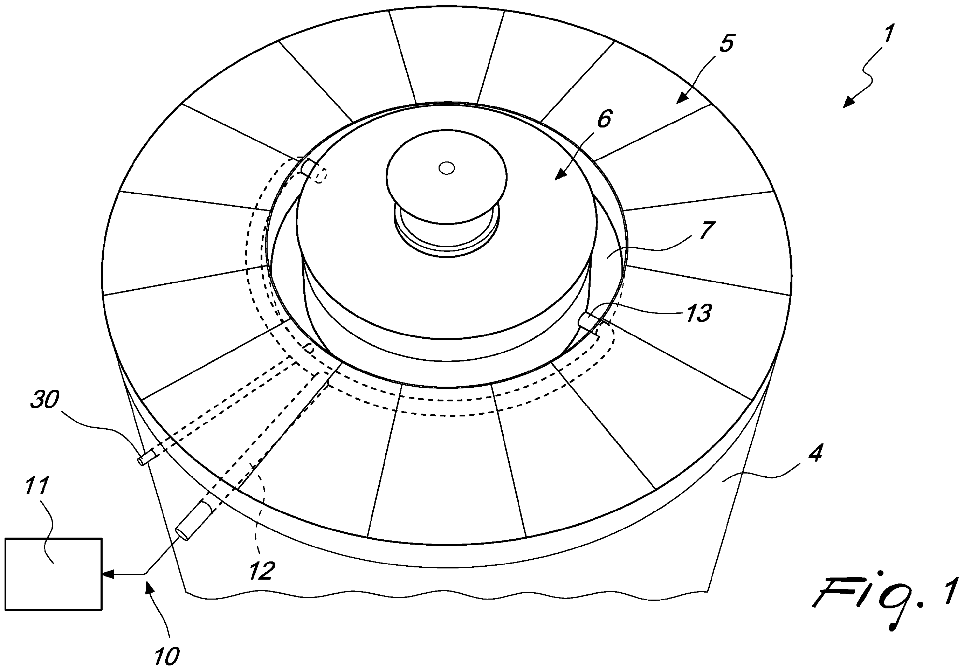

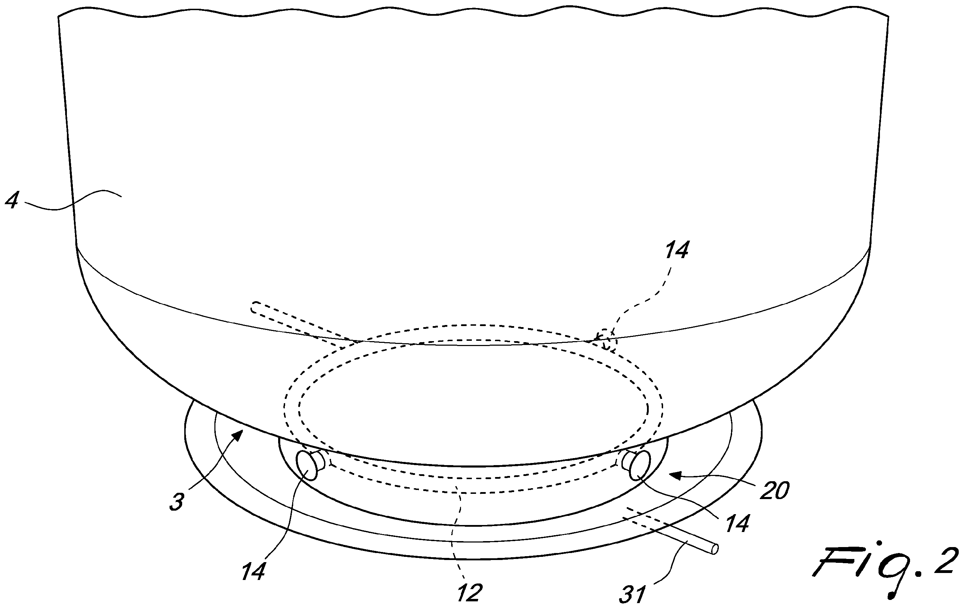

With reference to what is illustrated in Figures 1 to 4, the tank 1 is provided with a containment body 2 made of metallic material.

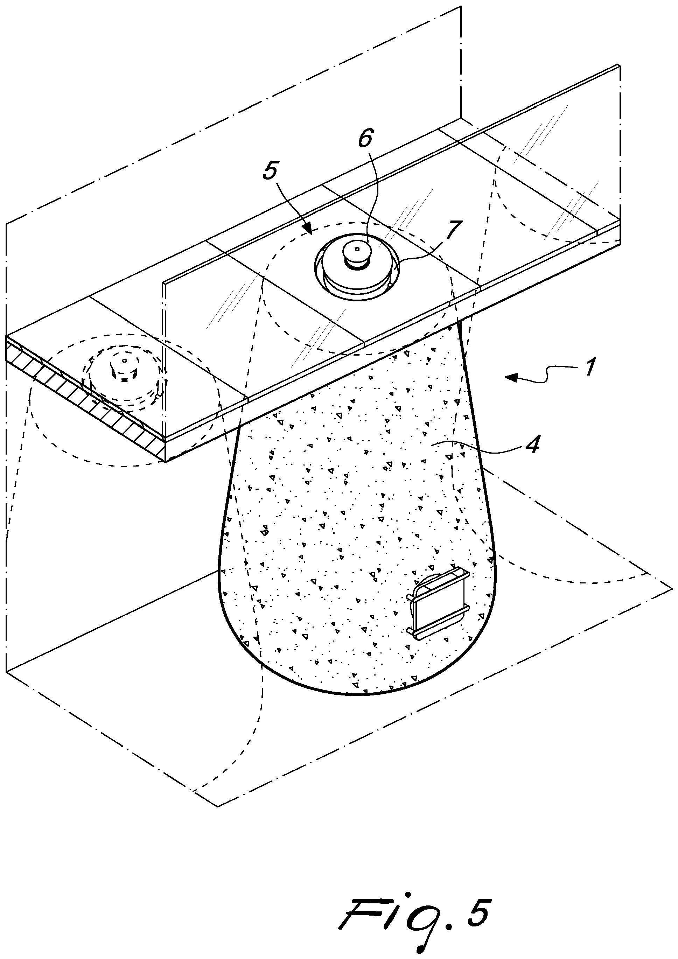

It is likewise possible, as illustrated in the embodiment of Figure 5, for the containment body 2 to be made at least partially of a cement-based material, for example concrete.

It is possible for the tank 1 to be associated with at least one carbon dioxide sensor, adapted to detect the passing of a preset threshold value.

The sensor can be arranged proximate to the first and/or the second extraction intakes 13, 14.

The at least one carbon dioxide sensor can be functionally connected to the extraction device 10 so as to command it to be powered on if the sensor detects the passing of the preset threshold value.

The operation of the tank according to the invention is the following.

When, during fermentation, the must produces carbon dioxide, the extraction device 10 is activated and, by extracting air from the first extraction intakes 13 through the extraction duct 12, creates a sort of depression inside the recessed portion 7.

In this manner, all the carbon dioxide produced inside the tank 1 that exits from the access hatch 6 and, as soon as it is outside the tank, being heavier than air, sinks into the recessed portion 7 due to gravity, is effectively extracted instantly.

In this manner the extraction device can be dimensioned in order to ensure the extraction of the carbon dioxide produced, and not the total exchange of all the air in the environment, as happens today.

Furthermore, the optional presence of the second extraction intakes 14, which are also connected to the extraction duct 12, makes it possible to remove the residual carbon dioxide that sinks to the floor.

In practice it has been found that the invention fully achieves the intended aim and objects, by providing a tank that is integrated, at least partially, with a carbon dioxide extraction device that is capable of drastically reducing both the visual impact and the space occupation of that extraction device.

Furthermore, the tank described and claimed makes it possible to evacuate all the carbon dioxide produced in an extremely effective and reliable manner.

The invention thus conceived is susceptible of numerous modifications and variations, all of which are within the scope of the appended claims. Moreover, all the details may be substituted by other, technically equivalent elements.

With reference to the embodiments shown and described, it is possible for the recessed portion 7 to be connected to a water drainage channel 30.

In practice the materials employed, provided they are compatible with the specific use, and the contingent dimensions and shapes, may be any according to requirements and to the state of the art.

The disclosures in Italian Patent Application No. 102022000014170 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A tank (1) for winemaking plants, which comprises a supporting frame for at least one containment body (2) which has a bottom wall (3), a lateral containment surface (4) and a top wall (5), an access hatch (6) being defined at said top closure wall (5), **characterized in that** it comprises, at said top closure wall (5), at least one recessed portion (7) which extends around said access hatch (6), there being at least one device (10) for extracting carbon dioxide which comprises extraction means (11) connected to at least one extraction duct (12) provided with at least one first extraction intake (13) which ends substantially proximate to said at least one recessed portion (7).

2. The tank (1) according to claim 1, **characterized in that** it comprises at least one supporting footing (20), said at least one extraction duct (12) having at least one second extraction intake (14) which is arranged at said supporting footing (20).

3. The tank (1) according to claim 2, **characterized in that** said at least one extraction duct (12) having at least one first extraction intake (13) which ends substantially proximate to said at least one recessed portion (7) is at least partially incorporated within said top closure wall (4).

4. The tank (1) according to one or more of the preceding claims, **characterized in that** there are at least two said first extraction intakes (13) that are arranged mutually angularly spaced apart around the axis of extension of said access hatch (6).

5. The tank (1) according to one or more of the preceding claims, **characterized in that** said at least one recessed portion (7) extends for at least 270° around the axis of extension of said access hatch (6).

6. The tank (1) according to one or more of the preceding claims, **characterized in that** said at least one recessed portion (7) extends externally to the lateral edge of said access hatch (6).

7. The tank (1) according to one or more of the preceding claims, **characterized in that** it comprises, proximate to said footing (20), a sunk region of the resting floor, said at least one second extraction intake (14) being arranged substantially at said sunk region.

8. The tank (1) according to one or more of the preceding claims, **characterized in that** said footing (20) comprises at least one central resting body, said at least one second extraction intake (14) being arranged substantially at said central resting body.

9. The tank (1) according to one or more of the preceding claims, **characterized in that** said footing (20) comprises at least three supporting feet (21a), said at least one second extraction intake (14) being arranged substantially at the supporting feet (21a).

10. The tank (1) according to one or more of the preceding claims, **characterized in that** it comprises at least one carbon dioxide sensor which is adapted to detect the passing of a preset threshold value, said at least one carbon dioxide sensor being functionally connected to said extraction device (10) so as to control the activation thereof if the sensor detects the passing of said preset threshold value.

11. The tank (1) according to one or more of the preceding claims, **characterized in that** said containment body (2) is made of metallic material.

12. The tank (1) according to one or more of the preceding claims, **characterized in that** said containment body (2) is at least partially made of cement-based material.
